# DEMANDE DE BREVET EUROPEEN

(11) **EP 2 578 077 A1**
(43) Date de publication de la demande: **10.04.2013**
(21) Numéro de dépôt: 12187334.3
(22) Date de dépôt: 05.10.2012
(51) Int. Cl.: A01G 13/06, F42B 4/26

(54) **Dispositif d'allumage**

(30) Priorité: 05.10.2011 FR 1158985
(71) Demandeur: Villanou, Jean-Pierre, 11100 Narbonne (FR)
(72) Inventeur: Villanou, Jean-Pierre, 11100 Narbonne (FR)
(74) Mandataire: Rhein, Alain

(57) **Abrégé**

La présente invention concerne un dispositif (1) d'allumage (1), constitué d'une enveloppe fermée à une extrémité et comprenant une ouverture à l'extrémité opposée, caractérisé par le fait que ladite enveloppe est divisée en au moins deux compartiments, un premier compartiment situé du coté de ladite ouverture étant rempli au moins en partie d'un matériau déflagrant (11), et un second compartiment étant rempli au moins en partie d'un matériau inflammable (18), ledit dispositif (1) comprenant encore des moyens d'ignition (10) au moins dudit matériau déflagrant (11).

## Description

La présente invention entre dans le domaine agricole, préférentiellement dans la culture des arbres fruitiers, ainsi que de la vigne.

L'invention concerne plus particulièrement le contrôle de la température afin d'éviter les dégâts dus au gel.

De manière connue, l'abaissement des températures, en particulier en dessous de zéro, durant les périodes de croissance d'une plante, que ce soit pendant la floraison aussi bien que pendant la maturation de ses fruits, entraine une perte de la production. En somme, le gel détruit une partie de la future récolte. Il est donc nécessaire de s'en prémunir.

Pour ce faire, l'invention concerne un dispositif d'allumage automatique de produits, permettant de créer un point d'émission de chaleur de manière à protéger les récoltes contre les effets du gel.

Un tel dispositif trouvera une application particulière, mais non limitative, dans la protection des vergers et des vignes.

De manière connue, l'implantation d'un grand nombre de sources de chaleur de faible puissance de type bougie, permet de lutter efficacement contre le gel. Le nombre de sources est fonction de l'intensité de la gelée, à savoir de la température et de sa durée, mais aussi de la topographie du terrain et du comportement de l'espèce cultivée. Il existe une multitude de solutions pour lutter contre les gelées, l'utilisation de bougies en est une.

Une telle bougie se présente sous la forme d'un récipient contenant un carburant, à l'état solide ou gélifié, à l'intérieur duquel est placée une mèche. Cette dernière est allumée et se consumera sur une durée variable en fonction dudit carburant. Un couvercle amovible referme le récipient, afin de protéger l'intérieur de la bougie des intempéries pendant le temps nécessaire à sa mise en place et avant son allumage.

Avec de telles bougies, il est nécessaire de procéder manuellement à leur allumage une à une. Pour cela on utilise généralement un chalumeau à gaz. Cette opération s'effectue presque toujours la nuit, elle est dangereuse et nécessite beaucoup de main d'oeuvre.

Un premier inconvénient réside dans le temps d'allumage de ces bougies. A titre d'exemple, si on considère la protection d'une exploitation d'une superficie de cent hectares avec une densité de 350 bougies à l'hectare, le temps nécessaire pour enlever le couvercle et allumer la bougie est au minimum d'une heure de main d'oeuvre par hectare. Ainsi, si l'on souhaite allumer l'ensemble des bougies en une heure, ce qui est une pratique courante pour être en mesure de contrôler la vitesse de la baisse de température, il est nécessaire de disposer d'une équipe d'une centaine de personnes. Il faut aussi tenir compte du fait que l'on est dans l'obligation d'anticiper l'heure d'allumage, il est donc impossible d'attendre la température critique. Cela conduit à des allumages préventifs, et parfois inutiles si la température se stabilise et ne descend pas en dessous du seuil critique. Dans tous les cas, cela augmente la consommation de combustible des bougies par leur allumage anticipé.

Une solution a été imaginée, consistant à déclencher l'allumage de la bougie au moyen d'un allumeur électrique. Une telle solution est décrite dans le document US 3 592 181. Un tel allumeur est constitué d'une charge pyrotechnique dont la combustion est déclenchée par un élément électrique chauffant. La flamme de l'allumeur est dirigée vers l'intérieur d'un réservoir de stockage d'un carburant, qui s'enflamme alors et continue de brûler.

Plus précisément, ledit allumeur est constitué d'une enveloppe fermée à une extrémité et ouverte au niveau de l'extrémité opposée. Cette enveloppe constitue un unique compartiment rempli d'un matériau inflammable.

Toutefois, une telle bougie nécessite encore l'ouverture manuelle de son couvercle, lors de son installation ou préalablement à son allumage.

Afin de pallier les inconvénients de la technique énoncés précédemment, il a été imaginé un dispositif d'allumage automatique permettant d'allumer à distance, et simultanément un grand nombre de bougies. La commande du dispositif peut être filaire mais aussi sans fil, notamment par radio fréquences. Des capteurs de températures peuvent compléter l'installation et déclencher automatiquement, sans actionnement manuel de la commande, l'allumage lors de la détection d'une température en dessous d'un seuil déterminé.

Pour ce faire, un tel dispositif est constitué d'une enveloppe fermée à une extrémité et comprenant une ouverture à l'extrémité opposée, caractérisé par le fait que ladite enveloppe est divisée en au moins deux compartiments, un premier compartiment situé du coté de ladite ouverture étant rempli au moins en partie d'un matériau déflagrant, et un second compartiment étant rempli au moins en partie d'un matériau inflammable, ledit dispositif comprenant encore des moyens d'ignition au moins dudit matériau déflagrant.

A ce titre, son allumage est réalisé par un dispositif au moins constitué par un inflammateur électrique et une torche pyrotechnique : la mise à feu s'effectuant grâce à un générateur électrique.

Le courant électrique délivré par le générateur initie l'inflammateur, ce qui initie un élément apte à transmettre le feu à la torche pyrotechnique.

De plus, le dispositif d'allumage peut assurer automatiquement l'éjection du couvercle lors de l'allumage de la bougie.

Pour ce faire, le dispositif comprend aussi une charge explosive, qui a pour fonction l'éjection du couvercle de la bougie, la torche permettant quant à elle d'enflammer la mèche de la bougie. Dans ce mode de fonctionnement, la puissance et la nature de la charge explosive déflagrante sont adaptées au type de contenant et au couvercle, tout en protégeant la torche pyrotechnique au moment de la déflagration de la charge.

La durée de fonctionnement et la matière utilisée pour la torche sont adaptées au type de mèche et de combustible constituant la bougie.

L'actionnement de l'inflammateur électrique peut être piloté à distance par un câblage, ou un système sans fil. Un réseau de capteurs de températures peut aussi déclencher une mise à feu automatique.

Le dispositif d'allumage selon l'invention peut aussi permettre d'enflammer plusieurs centaines de bougies en quelques secondes, conférant des économies de main d'oeuvre et de combustible considérables. Il est aussi facile d'adapter le nombre de bougies à enflammer en fonction de l'évolution de l'intensité de la gelée.

Ainsi, l'organisation de la lutte antigel est simplifiée par la réduction importante de personnel. L'allumage instantané des bougies au plus proche du seuil critique de température améliore l'efficacité de l'installation, diminue sa consommation en combustible, tout en facilitant la mise en oeuvre.

Selon d'autres caractéristiques additionnelle, non limitative, ladite ouverture peut être refermée de manière étanche par un opercule, lesdits moyens d'ignition traversant ledit opercule et entrant au sein au moins dudit premier compartiment.

Selon un mode de réalisation, ledit dispositif peut comprendre une paroi de séparation desdits compartiments et au moins une mèche traversant ladite paroi.

Préférentiellement, ladite paroi peut être au moins en partie constituée d'un matériau inflammable.

En outre, ledit opercule peut être solidaire ou maintenu en position par le sertissage d'une bague sur ladite ouverture de 1'enveloppe.

Par ailleurs, l'extrémité fermée peut comprendre une douille solidaire de ladite enveloppe.

De plus, les moyens d'ignition peuvent comprendre un inflammateur électrique.

L'invention concerne aussi un système constitué d'un câblage électrique relié à des moyens de commande, ledit câblage reliant en série plusieurs dispositifs d'allumage selon l'invention.

D'autres caractéristiques et avantages de l'invention ressortiront de la description détaillée qui va suivre des modes de réalisation non limitatifs de l'invention, en référence aux figures annexées, dans lesquelles:

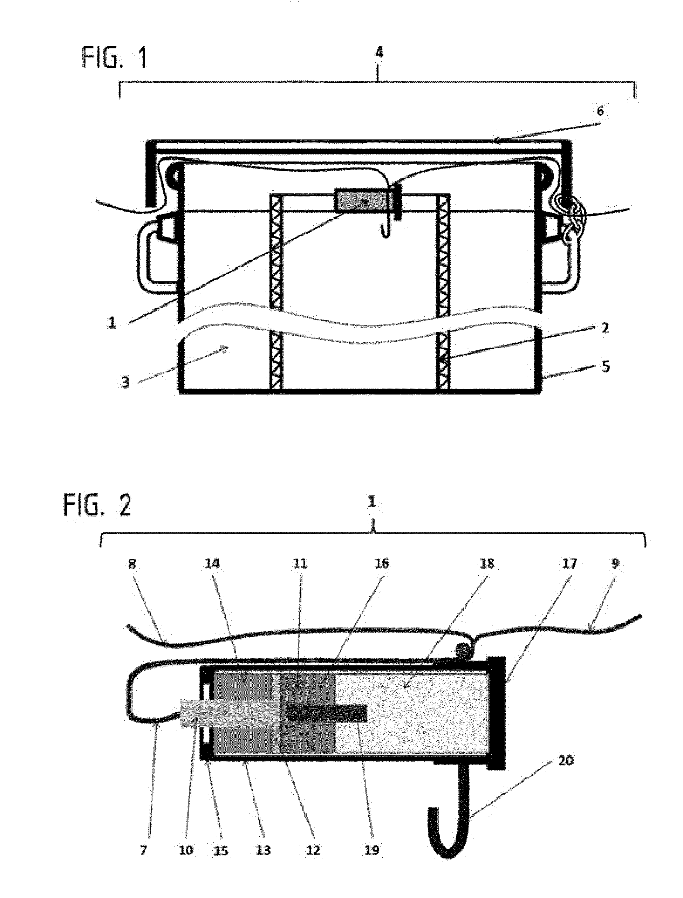

- la figure 1 représente une vue schématisée selon une coupe verticale d'un dispositif d'allumage selon un mode de réalisation préférentiel, ledit dispositif étant positionné au sein d'une bougie ; et
- la figue 2 représente une vue schématisée selon une coupe verticale longitudinale d'un autre mode spécifique de réalisation du dispositif d'allumage selon l'invention.

La présente invention, selon le mode préférentiel de réalisation, concerne un dispositif d'allumage 1 permettant d'allumer une mèche 2, et ainsi de faire fondre suffisamment de combustible 3 pour provoquer l'allumage d'une bougie 4 contenant un combustible et ladite mèche 2.

A ce titre, la bougie 4 se présente sous forme d'un contenant 5, rempli d'une quantité de combustible 3, à l'état solide ou bien gélifié. Ledit combustible 3 est traversé par une mèche 2. C'est cette mèche, qui une fois allumée, va se consumer selon une durée dépendant du type et de la quantité de combustible.

De plus, ledit contenant est aussi muni d'un couvercle 6, articulé ou non, notamment amovible, depuis une position de fermeture vers une position d'ouverture, et inversement. Ce couvercle se situe en partie supérieure et permet d'ouvrir le contenant et de le laisser ouvert pendant toute la durée de la combustion de la bougie.

En outre, lorsqu'il est amovible, ledit couvercle peut être relié au contenant par l'intermédiaire d'un lien, notamment d'une chaîne, le maintenant relié à la bougie en vue de la refermer ultérieurement, de préférence pour ou après son extinction.

A ce titre, on notera qu'il est possible de réaliser la fermeture dudit couvercle, en vue de refermer le contenant. En outre, cette fermeture peut permettre d'éteindre la bougie, par asphyxie en la privant d'air et donc de comburant.

Par ailleurs, concernant le maintien en position de fermeture dudit couvercle, il peut être opéré par l'intermédiaire de moyens adaptés. Ces derniers permettent, d'une part, de maintenir le couvercle en position de fermeture et, d'autre part, d'autoriser le passage vers la position d'ouverture lors du déclenchement dudit dispositif d'allumage.

Pour ce faire, selon un mode préférentiel de réalisation, ledit couvercle peut être soumis à des moyens de rappel élastique, depuis la position de fermeture vers la position d'ouverture. En somme, en position de fermeture, le couvercle est mis sous tension, maintenu fermé par les moyens. Toutefois, lors du déclenchement de l'allumage du dispositif, le couvercle est libéré et, sous l'action de la force de rappel, s'ouvre.

Selon un mode spécifique de réalisation, lesdits moyens de rappel élastique peuvent se situer au niveau de l'articulation du couvercle avec le contenant de la bougie. En particulier, ils peuvent se présenter sous la forme d'un ressort ou d'une lame en matériau élastique, l'un ou l'autre comprimé lors du passage en position de fermeture.

De plus, lesdits moyens de maintien en position fermée peuvent être prévus amovibles, de préférence sous forme d'une zone de moindre résistance, notamment thermique, de sorte que lors de l'allumage, une partie du matériau constituant ces moyens se détériore sous l'effet de la chaleur et libère le couvercle. Cette zone de moindre résistance peut aussi être mécanique et, lors de la déflagration, se rompre, se détacher, se déboîter ou se désengager, et ainsi libérer le couvercle.

De plus, le dispositif d'allumage 1 est placé à l'intérieur, de préférence sous le couvercle 6.

Selon un mode préférentiel de réalisation, ledit dispositif d'allumage peut être supporté par les moyens de maintien fermé dudit couvercle.

Un tel dispositif d'allumage 1 est constitué d'une enveloppe fermée à une extrémité et comprenant une ouverture à l'extrémité opposée.

Il se caractérise par le fait que ladite enveloppe est divisée en au moins deux compartiments, un premier compartiment situé du coté de ladite ouverture étant rempli au moins en partie d'un matériau déflagrant 11, et un second compartiment étant rempli au moins en partie d'un matériau inflammable 18.

On notera que lesdits premier et second compartiments peuvent être liés entre eux, uniquement séparés par le remplissage des matériaux déflagrant et inflammable. En somme, lesdits matériaux se retrouvent directement au contact l'un de l'autre et cette zone de contact constitue la séparation desdites parties.

Selon un autre mode de réalisation, lesdits compartiments peuvent être séparés par une protection de type paroi ou cloison 16. Cette dernière est préférentiellement constituée d'un matériau à même, d'une part, de protéger le matériau inflammable des effets de la déflagration et, d'autre part, de permettre l'allumage de ce même matériau inflammable remplissant le second compartiment.

En plus, ledit dispositif 1 comprend encore des moyens d'ignition 10 au moins dudit matériau déflagrant 11.

Selon encore un autre mode de réalisation, ladite ouverture peut être refermée de manière étanche par un opercule 12, lesdits moyens d'ignition traversant ledit opercule 12 et entrant au moins au sein dudit premier compartiment.

Selon un mode particulier de réalisation, lesdits moyens d'ignition peuvent aussi pénétrer au sein du second compartiment et dudit matériau inflammable.

En outre, un générateur (non représenté), via un câblage électrique incluant un câble 7, se dédoublant pour donner des fils 8 et 9, permet l'initiation des moyens d'ignition 10, notamment sous forme d'un inflammateur électrique 10, ce qui provoque la mise à feu de la charge explosive 11, constituée par le matériau déflagrant qui peut notamment être de la poudre noire ou bien un autre mélange détonnant, notamment à base de perchlorate de potassium.

L'opercule 12 a alors pour fonction d'assurer l'étanchéité entre la poudre 11 et l'enveloppe étanche 13, mais aussi de permettre de tasser le matériau déflagrant 11, tout en évitant qu'il ne vienne occuper le logement de l'inflammateur 10, notamment ménagé au sein d'une bague 14, lors de la fabrication du dispositif. L'opercule 12 est détruit par l'initiation de l'inflammateur 10, ce qui provoque l'initiation du matériau déflagrant 11.

L'initiation déflagrante peut provoquer une surpression, qui va faire céder un sertissage, en propulsant hors de l'enveloppe étanche 13 la paroi 16 ainsi que l'inflammateur 10 qui lui est solidaire. Le sertissage 15 possède une résistance à la pression moindre que l'enveloppe 13 et que la douille d'obturation 17, qui est généralement en métal, ce qui garanti l'éjection de la bague 14, et ainsi de conserver l'intégrité de l'enveloppe 13 à ce stade.

Le passage ainsi libéré dans l'enveloppe 13, permet à la torche pyrotechnique 18, qui vient d'être initiée, notamment par l'intermédiaire de l'élément de séparation 19, qui lui a été initiée par la combustion du matériau déflagrant 11, d'éjecter ou de brûler la paroi de protection 16. Une flamme s'échappe alors de l'enveloppe 13 du dispositif pendant une durée suffisante, en général environ plusieurs dizaine de secondes pour allumer la mèche 2, et faire fondre une quantité suffisante de combustible 3, pour allumer la bougie 4 et qu'elle se consume ensuite par elle-même. En somme, la torche forme un feu de bengale dont la combustion dure suffisamment pour allumer la bougie.

On notera que, dans le cas des compartiments joints sans paroi de séparation, c'est le matériau déflagrant qui peut lui-même jouer le rôle d'allumage du matériau inflammable.

La surpression et/ou la chaleur provoquée par l'initiation du matériau déflagrant 11 éjecte donc le couvercle 6, le faisant passer en position d'ouverture, comme évoqué précédemment. Cette surpression engendre aussi la mise à feu de l'élément de transmission du feu 19, qui peut être une mèche, qui va initier la torche pyrotechnique 18. Cette dernière peut être une composition pyrotechnique, notamment à base de magnésium de type lance d'allumage d'artifice. La paroi 16, qui peut être solidaire de la mèche 19, afin d'en faciliter la fabrication, protège la torche 18 lors de l'explosion de la poudre 11, et garanti ainsi que l'allumage de la torche 18 a lieu après l'explosion.

Un élément de fixation 20 permet de lier l'ensemble du dispositif d'allumage 1, à la mèche 2 et/ou au combustible 3, afin d'éviter tous déplacements du dispositif 1, lors de l'explosion de la poudre 11 et de la mise à feu de la torche 18. Sa rigidité lui permet de maintenir fixé le dispositif 1 sur tous types de combustibles solides, même par des températures négatives.

La puissance et la nature de la charge explosive 11 peuvent être adaptées au type de contenant 5 et de couvercle 6.

La durée de fonctionnement et la matière utilisée pour la torche pyrotechnique 18 peuvent être adaptées au type de mèche 2 et de combustible 3 constituant la bougie 4.

L'élément 20 a pour fonction le maintien en position du dispositif d'allumage 1, lors de sa mise à feu, afin de garantir l'allumage de la mèche 2, par le bon positionnement de la flamme de la torche 18. Il permet aussi de bloquer le câble bifilaire 7 en position, afin d'empêcher son arrachement au niveau de l'inflammateur 10. Il peut être constitué de toute matière, faire bloc avec le dispositif d'allumage 1, ou être une pièce rapportée.

Ce dispositif de maintien 20 permet d'utiliser l'allumeur sur tous types de bougies antigel.

Selon une présentation particulière, mais non limitative, plusieurs dispositifs 1, sont montés le long du câblage. Ce montage peut s'effectuer électriquement en série ou bien en parallèle. Ils peuvent être disposés à intervalles réguliers, notamment tous les 5 à 10 mètres. Un tel système forme alors une guirlande de dispositifs d'allumage 1. Ce système peut être de longueur variable et conditionné en bobine.

On notera que le câble 7 donne naissance aux fils 8 et 9 au niveau du maintien du câble 7 sur la douille 17. Cette présentation ayant pour objectif de rationaliser au maximum la mise en place et l'utilisation des dispositifs 1.

En somme, un tel système est constitué d'un câblage électrique relié à des moyens de commande, ledit câblage reliant en série plusieurs dispositifs d'allumage selon l'invention.

Avantageusement, selon un mode particulier de réalisation, non représenté, l'allumage des bougies peut être commandé par un système sans fil, piloté ou non par des capteurs, la commande est alors totalement automatisée.

On notera que le dispositif d'allumage 1 selon l'invention peut permettre uniquement l'allumage de la bougie, son couvercle étant préalablement ouvert, ou bien l'allumage et l'ouverture du couvercle dans une même opération en deux étapes successives.

## Revendications

1. Dispositif d'allumage (1), constitué d'une enveloppe fermée à une extrémité et comprenant une ouverture à l'extrémité opposée, **caractérisé par le fait que** ladite enveloppe est divisée en au moins deux compartiments, un premier compartiment situé du coté de ladite ouverture étant rempli au moins en partie d'un matériau déflagrant (11), et un second compartiment étant rempli au moins en partie d'un matériau inflammable (18), ledit dispositif (1) comprenant encore des moyens d'ignition (10) au moins dudit matériau déflagrant (11).

2. Dispositif selon la revendication 1, **caractérisé par le fait que** ladite ouverture est refermée de manière étanche par un opercule (12), lesdits moyens d'ignition traversant ledit opercule (12) et entrant au sein au moins dudit premier compartiment.

3. Dispositif selon la revendication 1, **caractérisé par le fait qu'**il comprend une paroi de séparation desdits compartiments et au moins une mèche (19) traversant ladite paroi.

4. Dispositif selon la revendication 3, **caractérisé par le fait que** ladite paroi (16) est au moins en partie constituée d'un matériau inflammable (19).

5. Dispositif selon l'une quelconque des revendications 1 à 4, **caractérisé par le fait que** ledit opercule (12) est solidaire ou maintenu en position par le sertissage d'une bague (14) sur ladite ouverture de l'enveloppe (13).

6. Dispositif selon l'une quelconque des revendications précédentes, **caractérisé par le fait que** l'extrémité fermée comprend une douille (17) solidaire de ladite enveloppe (13).

7. Dispositif selon l'une quelconque des revendications précédentes, **caractérisé par le fait que** les moyens d'ignition comprennent un inflammateur électrique (10).

8. Système constitué d'un câblage électrique relié à des moyens de commande, ledit câblage reliant en série plusieurs dispositifs d'allumage selon l'une quelconque des revendications précédentes.
